# EUROPEAN PATENT APPLICATION

(11) **EP 4 535 858 A1**
(43) Date of publication of application: **09.04.2025**
(21) Application number: 22943774.4
(22) Date of filing: 26.05.2022
(51) Int. Cl.: H04W 28/06

(54) **TERMINAL, RADIO COMMUNICATION METHOD, AND BASE STATION**

(71) Applicant: NTT DOCOMO, INC., Tokyo 100-6150 (JP)
(72) Inventor: ECHIGO, Haruhi, Tokyo 100-6150 (JP); HARADA, Hiroki, Tokyo 100-6150 (JP); WANG, Xin, Beijing 100190 (CN); GUAN, Yazhuo, Beijing 100190 (CN); NAKAMURA, Issei, Beijing 100190 (CN); LIU, Liu, Beijing 100190 (CN)
(74) Representative: Hoffmann Eitle
(86) International application number: PCT/JP2022/021615
(87) International publication number: WO 2023/228374

(57) **Abstract**

A terminal according to one aspect of the present disclosure includes a receiving section that receives information for identification of an artificial intelligence (AI) model based on a model transfer category, and a control section that performs inference based on the AI model identified based on the information. According to one aspect of the present disclosure, appropriate inference/use of resources based on preferable overhead reduction/AI model can be implemented.

## Description

### Technical Field

The present disclosure relates to a terminal, a radio communication method, and a base station in next-generation mobile communication systems.

### Background Art

In a Universal Mobile Telecommunications System (UMTS) network, the specifications of Long-Term Evolution (LTE) have been drafted for the purpose of further increasing high speed data rates, providing lower latency and so on (see Non-Patent Literature 1). In addition, for the purpose of further high capacity, advancement and the like of the LTE (Third Generation Partnership Project (3GPP) Release (Rel.) 8 and Rel. 9), the specifications of LTE-Advanced (3GPP Rel. 10 to Rel. 14) have been drafted.

Successor systems of LTE (for example, also referred to as "5th generation mobile communication system (5G)," "5G+ (plus)," "6th generation mobile communication system (6G)," "New Radio (NR)," "3GPP Rel. 15 (or later versions)," and so on) are also under study.

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

### Summary of Invention

### Technical Problem

Regarding future radio communication technology, utilizing artificial intelligence (AI) technology such as machine learning (ML) for control, management, and the like of a network/device has been under study.

Incidentally, when an AI model is used, a partial or complete AI model/data set needs to be transferred between a plurality of entities (for example, a terminal (a user terminal, a User Equipment (UE)) and a base station (BS)). For example, it is considered that the BS/UE transmits, to a partner, information related to a model available for itself or the partner, or indicates/configures a model to be used by the partner.

It is considered that the BS trains an AI model, and transmits an indication to the UE to deploy the trained model. It is considered that the UE trains an AI model, and reports the trained model to the BS. It is considered that, in joint AL model training of the BS and the UE, information/data set for training is transmitted to each other.

However, while transfer of an AI model/data set requires communication overhead of a radio interface, an efficient transfer method for an AI model/data set taking account of interoperability between vendors and the like has not yet been studied. An implementation method for an advanced function such as online model update/data transfer for high-end terminals has not yet been studied either.

While there are various model formats, aligning methods for models and codes, and the like, unless the transfer method, the implementation method, and the like described above are appropriately defined, appropriate inference/high-efficiency use of resources based on appropriate overhead reduction/AI model cannot be achieved, and thus enhancement of communication throughput/communication quality may be inhibited.

In view of this, the present disclosure has one object to provide a terminal, a radio communication method, and a base station that can implement appropriate inference/use of resources based on preferable overhead reduction/AI model.

### Solution to Problem

A terminal according to one aspect of the present disclosure includes a receiving section that receives information for identification of an artificial intelligence (AI) model based on a model transfer category, and a control section that performs inference based on the AI model identified based on the information.

### Advantageous Effects of Invention

According to one aspect of the present disclosure, appropriate inference/use of resources based on preferable overhead reduction/AI model can be implemented.

### Brief Description of Drawings

[FIG. 1] FIG. 1 is a diagram to illustrate an example of framework of management of an AI model.
[FIG. 2] FIG. 2 is a diagram to illustrate an example of file formats for AI model transfer.
[FIG. 3] FIGS. 3A and 3B are conceptual diagrams of transfer of a partial or complete AI model.
[FIG. 4] FIGS. 4A to 4C are diagrams to illustrate examples of alignment of models and codes.
[FIG. 5] FIG. 5 is a diagram to illustrate an example of a flowchart according to Embodiment 1.1.
[FIG. 6] FIG. 6 is a diagram to illustrate an example of a flowchart according to Embodiment 1.1.
[FIG. 7] FIGS. 7A and 7B are diagrams to illustrate examples of network structures identified with information of the network structures according to Embodiment 1.2.1.
[FIG. 8] FIGS. 8A to 8C are diagrams to illustrate examples of network structures identified with information of the network structures according to Embodiment 1.2.2.
[FIG. 9] FIG. 9 is a diagram to illustrate an example of a flowchart according to Embodiment 1.2.1/1.2.2.
[FIG. 10] FIG. 10 is a diagram to illustrate an example of a flowchart according to Embodiment 1.2.3.
[FIG. 11] FIG. 11 is a diagram to illustrate an example of a flowchart according to Embodiment 1.3.
[FIG. 12] FIG. 12 is a diagram to illustrate an example of a flowchart according to Embodiment 1.4.
[FIG. 13] FIGS. 13A and 13B are diagrams to illustrate examples of a position of an MMU in a protocol stack according to a second embodiment.
[FIG. 14] FIG. 14 is a diagram to illustrate an example of a schematic structure of a radio communication system according to one embodiment.
[FIG. 15] FIG. 15 is a diagram to illustrate an example of a structure of a base station according to one embodiment.
[FIG. 16] FIG. 16 is a diagram to illustrate an example of a structure of a user terminal according to one embodiment.
[FIG. 17] FIG. 17 is a diagram to illustrate an example of a hardware structure of the base station and the user terminal according to one embodiment.
[FIG. 18] FIG. 18 is a diagram to illustrate an example of a vehicle according to one embodiment.

### Description of Embodiments

### (Application of Artificial Intelligence (AI) Technology to Radio Communication)

Regarding future radio communication technology, utilizing AI technology such as machine learning (ML) for control, management, and the like of a network/device has been under study.

For example, regarding future radio communication technology, utilizing AI technology for channel state information (Channel State Information Reference Signal (CSI)) feedback enhancement (for example, overhead reduction, accuracy improvement, prediction), beam management improvement (for example, accuracy improvement, prediction in the time/spatial domain), position measurement improvement (for example, position estimation/prediction improvement), and the like has been under study.

Inference using an AI model may be performed in a terminal (a user terminal, a User Equipment (UE)), or may be performed in a network (NW) (for example, a base station (BS)).

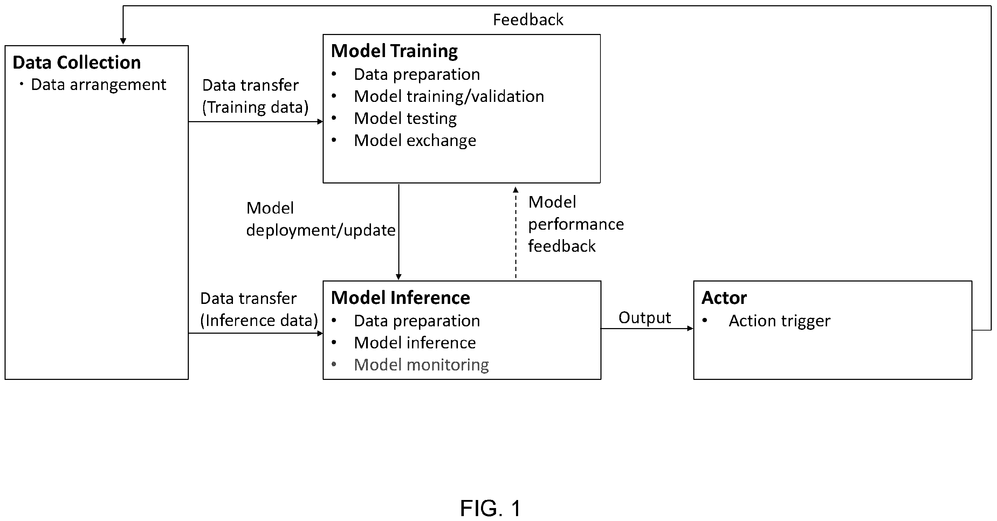

FIG. 1 is a diagram to illustrate an example of framework of management of an AI model. In the present example, stages related to the AI model are illustrated in blocks. The present example is also expressed as life cycle management of the AI model.

A data collection stage corresponds to a stage of collecting data for generation/update of the AI model. The data collection stage may include data arrangement (for example, determination as to which data is to be transferred for model training/model inference), data transfer (for example, transfer of data to an entity (for example, the UE, the BS) that performs model training/model inference), and the like.

In a model training stage, model training is performed based on data (training data) transferred from the collection stage. The stage may include data preparation (for example, implementation of data pre-processing, cleaning, formatting, transformation, and the like), model training/validation, model testing (for example, check whether a trained model satisfies a threshold of performance), model exchange (for example, transfer of a model for distributed learning), model deployment/update (deploy/update of a model to an entity that performs model inference), and the like.

In a model inference stage, model inference is performed based on data (inference data) transferred from the collection stage. The stage may include data preparation (for example, implementation of data pre-processing, cleaning, formatting, transformation, and the like), model inference, model monitoring (for example, monitoring of performance of model inference), model performance feedback (feedback of model performance to an entity that performs model training), output (provision of output of a model to an actor), and the like.

The actor stage may include an action trigger (for example, determination as to whether or not an action is triggered for another entity), feedback (for example, feedback of information necessary for training data/inference data/performance feedback), and the like.

Note that, for example, training of a model for mobility optimization may be performed in Operation, Administration and Maintenance (Management) (OAM)/gNodeB (gNB) in the NW, for example. The former case has advantages in interoperation, large-capacity storage, operator manageability, and model flexibility (feature engineering and the like). The latter case has advantages in latency in model update and non-necessity of data exchange and the like for model deployment. The model inference may be performed in the gNB, for example.

Depending on a use case, the entity that performs training/inference may be different.

For example, regarding AI-aided beam management based on a measurement report, the OAM/gNB may perform model training, and the gNB may perform model inference.

Regarding AI-aided UE-assisted positioning, the Location Management Function (LMF) may perform model training, and the LMF may perform model inference.

Regarding CSI feedback/channel estimation using an autoencoder, the OAM/gNB/UE may perform model training, and the gNB/UE may (jointly) perform model inference.

Regarding AI-aided beam management based on beam measurement or AI-aided UE-based positioning, the OAM/gNB/UE may perform model training, and the UE may perform model inference.

Incidentally, when an AI model is used, a partial or complete AI model/data set needs to be transferred between a plurality of entities (for example, the UE and the BS). For example, it is considered that the BS/UE transmits, to a partner, information related to a model available for itself or the partner, or indicates/configures a model to be used by the partner.

It is considered that the BS trains an AI model, and transmits an indication to the UE to deploy the trained model. It is considered that the UE trains an AI model, and reports the trained model to the BS. It is considered that, in joint AI model training of the BS and the UE, information/data set for training is transmitted to each other.

However, while transfer of an AI model/data set requires communication overhead of a radio interface (air interface), an efficient transfer method for an AI model/data set taking account of interoperability between vendors and the like has not yet been studied. An implementation method for an advanced function such as online model update/data transfer for high-end terminals has not yet been studied either.

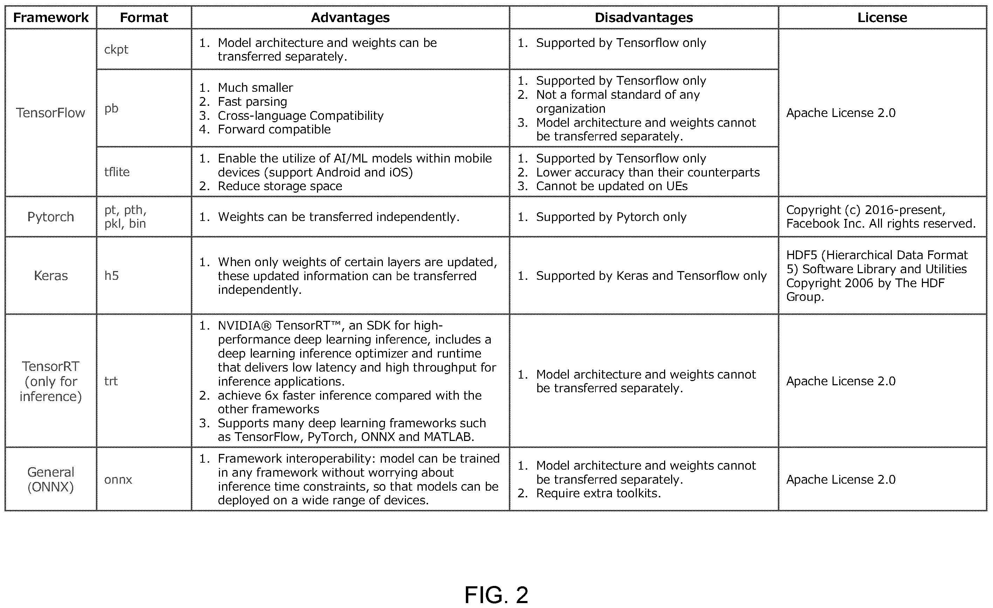

Some examples will be described below. FIG. 2 is a diagram to illustrate an example of file formats for AI model transfer. As illustrated in the figure, the current frameworks for AI models include TensorFlow (trademark), Pytorch, Keras, TensorRT, Open Neural Network Exchange (ONNX), and the like. One or more file formats for the AI model are also present for each framework. Each file format has a different feature (for example, ckpt can separately transfer model architecture and weights, and the like).

Note that the file format may correspond to a filename extension of one file, or may indicate structures (models, formats) of a plurality of files. For example, a ckpt format may include a meta file describing a structure of a model (the filename extension is meta, for example), a data file for weight information (the filename extension is data-00000-of-00001, for example), and an index file indicating a relationship between each file and step (the filename extension is index, for example). An h5 (also referred to as Hierarchical Data Format 5 (HDF5)) format may include one file indicating contents such as configurations and weights of each layer of the AI model.

In the present disclosure, information represented with a certain filename extension (file format) may mean information represented in a format to which the file format conforms (that is, any filename extension may be used).

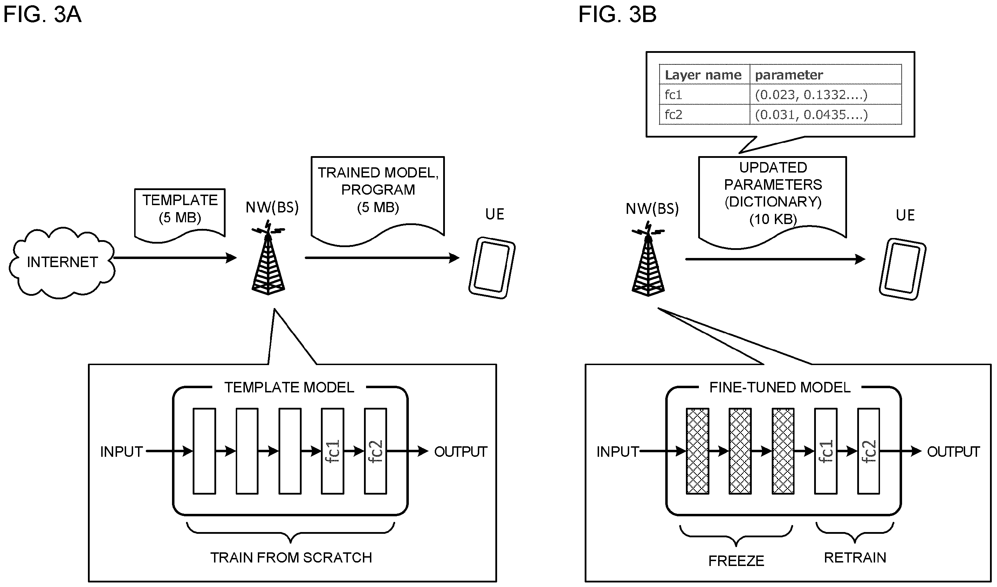

FIGS. 3A and 3B are conceptual diagrams of transfer of a partial or complete AI model. The present example is an example in which the BS trains a model and transfers information of the trained model to the UE.

FIG. 3A is an example of transferring a complete AI model. The BS downloads information (for example, 5 megabytes (MB)) of a template model (for example, a model in which how many layers are used, what the input is, what the output is, and the like are identified) via the Internet in advance. The BS derives a model (trained model) that can implement model training based on the template model, determine weights and the like of each layer, and perform appropriate inference from scratch (zero), using data (for example, information such as measurement results reported from the UE) included in the BS.

The BS transmits information (for example, 5 MB) related to the trained model (or a program for implementing the model) to the UE. The UE may deploy the trained model. The trained model may be referred to as a common model, a base model, a reference model, or the like as a foundation of an update model to be described later.

FIG. 3B is an example of transferring a partial AI model. The BS may update the trained model of FIG. 3A. For example, the BS may assume that first three layers (shallow layers) of the model of FIG. 3B are frozen and thus not update (adjust) parameters (for example, weights) related thereto, and may retrain only the last two layers (deep layers, which herein correspond to function (fc) 1 and fc2). Such a model may be referred to as a fine-tuned model.

Regarding the retrained model, the BS transmits information related to updated parameters (which may be, in Python (trademark), for example, indicated with a dictionary being a data structure for associating keys and values) (for example, 10 kilo(K)B) to the UE. In FIG. 3B, the information indicates values of parameters of the last two layers (fc1 and fc2). The UE may apply the updated parameters to the already deployed model as described with reference to FIG. 3A, and thereby update the model.

According to the method of performing notification of only the information necessary for update of the model as in FIG. 3B, a load imposed on the gNB in model update, communication overhead for the UE, and the like can be preferably reduced. The method of FIG. 3B may be applied to increase the speed of training when a time difference from training (may be referred to as pre-training) of FIG. 3A is small.

To identify (or deploy, update, or the like) an AI model, information of an application model (which may include model architecture, a file for parameters to be trained, and the like), an application module (which may include a program for training/inference), and data (data set) is necessary.

These three entities may be separately managed. The UE/BS may align (or may associate) models, programs (codes), and the like, using their respective identifiers (IDs), for example. These multiple information may be managed in a database.

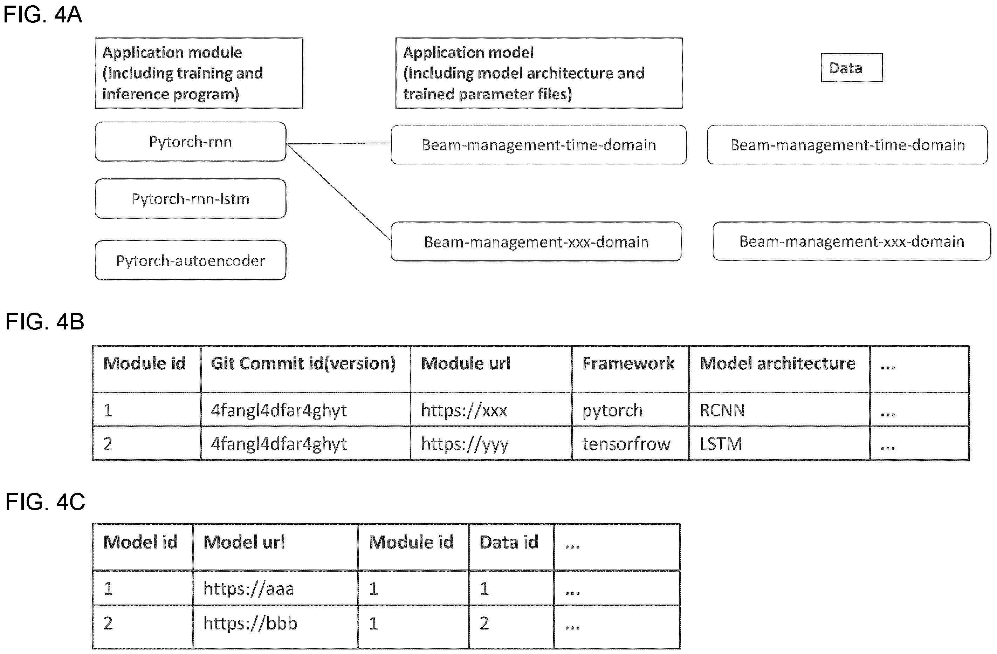

FIGS. 4A to 4C are diagrams to illustrate examples of alignment of models and codes. FIG. 4A illustrates an example of association of the three entities described above. In the present example, an application module named Pytorch-rnn is associated with an application model named Beam-management-time-domain/Beam-management-xxx-domain. Data (given the same name) corresponding to the application model may be used.

FIG. 4B illustrates an example of a database of the application module. Information related to a module ID (for example, a Git commit ID, a module source Uniform Resource Locator (URL), framework, model architecture) is illustrated.

FIG. 4C illustrates an example of a database of the application model. Information related to a model ID (for example, a model source URL, a module ID, a data ID) is illustrated.

Note that, in the present disclosure, the source URL (also simply referred to as a source) may mean a URL for uploading (transmission)/downloading (acquisition) of information and the like related to the module/model.

As described above, while there are various model formats, aligning methods for models and codes, and the like, unless the transfer method, the implementation method, and the like described above are appropriately defined, appropriate inference/high-efficiency use of resources based on appropriate overhead reduction/AI model cannot be achieved, and thus enhancement of communication throughput/communication quality may be inhibited.

In view of this, the inventors of the present invention came up with the idea of a preferable control method for model transfer. Note that each embodiment of the present disclosure may be applied when AI/prediction is not used.

In one embodiment of the present disclosure, a terminal (user terminal, User Equipment (UE))/a base station (BS) performs training of an ML model in a training mode, and implements the ML model in an inference mode (also referred to as an infer mode, or the like). In the inference mode, validation of accuracy of the ML model trained in the training mode (trained ML model) may be performed.

In the present disclosure, the UE/BS may input channel state information, a reference signal measurement value, and the like to the ML model and output highly accurate channel state information / measured value / beam selection/position, future channel state information / radio link quality, and the like.

Note that, in the present disclosure, AI may be interpreted as an object (also referred to as a target, data, function, program, and the like) having (implementing) at least one of the following features:
- estimation based on observed or collected information,
- selection based on observed or collected information, and
- prediction based on observed or collected information.

In the present disclosure, the object may be, for example, an apparatus, a device, or the like, such as a terminal or a base station. In the present disclosure, the object may correspond to a program/model/entity operating in the apparatus.

Note that, in the present disclosure, the ML model may be interpreted as an object having (implementing) at least one of the following features:
- feeding information to thereby generate an estimated value,
- feeding information to thereby predict an estimated value,
- feeding information to thereby find a feature, and
- feeding information to thereby select an operation.

In the present disclosure, an ML model, a model, an AI model, predictive analytics, a predictive analytics model, and the like may be interchangeably interpreted. The ML model may be derived by using at least one of regression analysis (for example, linear regression analysis, multiple regression analysis, logistic regression analysis), support vector machine, random forest, neural network, deep learning, and the like. In the present disclosure, the model may be interpreted as at least one of an encoder, a decoder, a tool, and the like.

The ML model outputs at least one information among an estimated value, a predicted value, a selected operation, classification, and the like, based on the input information.

Examples of the ML model may include supervised learning, unsupervised learning, and reinforcement learning. The supervised learning may be used to perform learning of a general rule for mapping an input to an output. The unsupervised learning may be used to perform learning of characteristics of data. The reinforcement learning may be used to perform learning of operation for maximizing a goal.

In the present disclosure, "generate," "calculate," "derive," and the like may be interchangeably interpreted. In the present disclosure, "perform," "manage," "operate," "carry out," and the like may be interchangeably interpreted. In the present disclosure, "train," "learn," "update," "retrain," and the like may be interchangeably interpreted. In the present disclosure, inference, after-training, substantial use, actual use, and the like may be interchangeably interpreted. A signal may be interpreted as a signal/channel and vice versa.

In the present disclosure, the training mode may correspond to a mode in which a UE/BS transmits/receives a signal for an ML model (in other words, an operation mode in a training period). In the present disclosure, the inference mode may correspond to a mode in which a UE/BS performs an ML model (for example, performs a trained ML model to predict an output) (in other words, an operation mode in an inference period).

In the present disclosure, the training mode may mean a mode in which, as a specific signal to be transmitted in the inference mode, the specific signal with high overhead (for example, a large resource amount) is transmitted.

In the present disclosure, the training mode may mean a mode in which a first configuration (for example, a first DMRS configuration, a first CSI-RS configuration, a first CSI report configuration) is referred to. In the present disclosure, the inference mode may mean a mode in which a second configuration (for example, a second DMRS configuration, a second CSI-RS configuration, a second CSI report configuration), which is different from the first configuration, is referred to. In the first configuration, a larger number of at least one of time resources, frequency resources, coding resources, ports (antenna ports) related to measurement than those in the second configuration may be configured. Note that, for example, the CSI report configuration may include a configuration related to an autoencoder.

Embodiments according to the present disclosure will be described in detail with reference to the drawings as follows. The radio communication methods according to respective embodiments may each be employed individually, or may be employed in combination.

In the present disclosure, "A/B" and "at least one of A and B" may be interchangeably interpreted. In the present disclosure, "A/B/C" may mean "at least one of A, B, and C".

In the present disclosure, activate, deactivate, indicate, select, configure, update, determine, and the like may be interchangeably interpreted. In the present disclosure, "support," "control," "controllable," "operate," "operable," and the like may be interchangeably interpreted.

In the present disclosure, radio resource control (RRC), an RRC parameter, an RRC message, a higher layer parameter, a field, an information element (IE), a configuration, and the like may be interchangeably interpreted. In the present disclosure, a Medium Access Control control element (MAC Control Element (CE)), an update command, an activation/deactivation command, and the like may be interchangeably interpreted.

In the present disclosure, the higher layer signaling may be, for example, any one or combinations of Radio Resource Control (RRC) signaling, Medium Access Control (MAC) signaling, broadcast information, and the like.

In the present disclosure, the MAC signaling may use, for example, a MAC control element (MAC CE), a MAC Protocol Data Unit (PDU), or the like. The broadcast information may be, for example, a master information block (MIB), a system information block (SIB), minimum system information (Remaining Minimum System Information (RMSI)), other system information (OSI), or the like.

In the present disclosure, physical layer signaling may be, for example, downlink control information (DCI), uplink control information (UCI), or the like.

In the present disclosure, an index, an identifier (ID), an indicator, a resource ID, and the like may be interchangeably interpreted. In the present disclosure, a sequence, a list, a set, a group, a cluster, a subset, and the like may be interchangeably interpreted.

In the present disclosure, estimation, prediction, and inference may be interchangeably interpreted. In the present disclosure, "estimate," "predict," and "infer" may be interchangeably interpreted.

In the present disclosure, an autoencoder, an encoder, a decoder, and the like may be interpreted as at least one of a model, an ML model, a neural network model, an AI model, an AI algorithm, and the like. The autoencoder may be interchangeably interpreted as any autoencoder, such as a stacked autoencoder and a convolutional autoencoder. The encoder/decoder of the present disclosure may employ a model such as a Residual Network (ResNet), DenseNet, and RefineNet.

In the present disclosure, an encoder, encoding, to encode, to modify/change/control using an encoder, and the like may be interchangeably interpreted. In the present disclosure, a decoder, decoding, to decode, to modify/change/control using a decoder, and the like may be interchangeably interpreted.

In the present disclosure, a bit, a bit string, a bit sequence, a sequence, a value, information, a value obtained from a bit, information obtained from a bit, and the like may be interchangeably interpreted.

In the present disclosure, a layer (of an encoder) may be interchangeably interpreted as a layer (an input layer, an intermediate layer, or the like) used in an AI model. The layer of the present disclosure may correspond to at least one of an input layer, an intermediate layer, an output layer, a batch normalization layer, a convolutional layer, an activation layer, a dense layer, a normalization layer, a pooling layer, an attention layer, a dropout layer, a fully connected layer, and the like.

In the present disclosure, "deploy," "make available," "dispose," "develop," and the like may be interchangeably interpreted.

In the present disclosure, the data server may be interchangeably interpreted as a repository, an uploader, a library, a cloud server, or simply a server or the like. The data server in the present disclosure may be provided by any platform such as GitHub (trademark), or may be operated by any company/organization.

### (Radio Communication Method)

### <First Embodiment>

A first embodiment relates to model transfer categories.

The model transfer category may be represented as category X (X is an integer), for example, and may include at least one of the following, for example:
- Category 0 (supporting a method with a minimized air interface signal),
- Category 1 (supporting a method of partial model transfer via an air interface),
- Category 2 (supporting a method of partial or complete model transfer via an air interface),
- Category 3 (supporting a method of transfer of a data set for training/validation/test via an air interface).

Note that the air interface may mean an (NR) radio communication interface between the UE and the BS, and the air interface signal may mean a signal transmitted using the air interface.

Determination as to based on which category the BS/UE operates will be described later in a third embodiment.

### [Embodiment 1.1: Operation of Category 0]

The BS/UE of category 0 deploys models acquired from a third party (a data server thereof). In Embodiment 1.1, details of models, an acquisition method therefor, and the like may be defined outside the scope of 3GPP. For example, a specific vendor/operator/AI team may upload/download AI models to/from a data server, or the like. The BS/UE may deploy models indicated by model information received from the data server.

The model information may mean information including at least one of the following:
- Information of input/output of each AI model (which may include meta-information),
- Information of pre-processing/post-processing for input/output of each AI model,
- Information of parameters of each AI model,
- Training information for each AI model,
- Inference information for each AI model,
- Performance information related to each AI model,
- Index (for example, a model ID) for identifying each AI model.

When the BS/UE downloads (receives) the model information from the data server, the BS/UE may download an image (for example, a Docker (trademark) image, an Anaconda image) from the data server/another server. Based on the image, the BS/UE may start (configure, use) an execution environment for the AI model (the execution environment may be referred to as a container; for example, a virtual environment including a package/library necessary for the AI model and being capable of execution of Python), or may create an executable AI model in the container.

The UE may report a capability for AI to the NW (BS), using UE capability information. The capability may be information related to features of AI models that can be deployed by the UE, for example, and may indicate at least one of the following, for example:
- Maximum floating point operations (FLOPs (note that "s" is in lowercase)) of each AI model that can be deployed by the UE (this means the amount of floating point operations),
- Maximum number of parameters of each AI model that can be deployed by the UE,
- Minimum granularity of weight information (a value represented thereby) supported by the UE,
- Layer/algorithm/function supported by the UE.

The BS and the UE may exchange (transmit/receive) information for AI model identification (hereinafter also referred to as model identification information) via RRC signaling. The model identification information may include information of at least one of a source (for example, a Uniform Resource Locator (URL)) of each AI model, a model type (for example, usage (that is, a purpose, a function)), and index information of a model file (for example, a hash value (message digest algorithm 5 (MD5) code or the like) of the model file).

When models are correctly deployed based on signaling, the BS may configure a model to be used (or compiled) for the UE.

Note that, in the present disclosure, "to compile" may be interchangeably interpreted as "to configure/to be configured", "to activate/to be activated", "to enable/to be enabled", "to record/to be recorded", or the like. In the present disclosure, "compile a certain AI model" may be interchangeably interpreted as "make inference using the certain AI model applicable (inference using the certain AI model becomes applicable)", "apply a compiled AI model", or the like.

In other words, the UE may determine that the UE can perform inference using a compiled AI model but cannot perform inference using an uncompiled AI model.

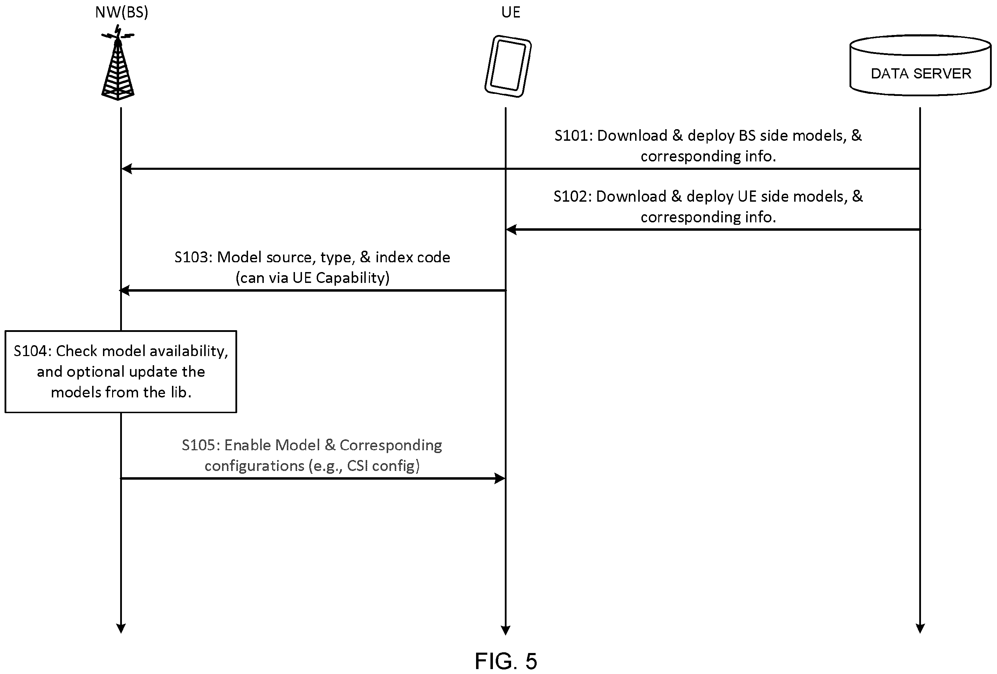

FIG. 5 is a diagram to illustrate an example of a flowchart according to Embodiment 1.1. Note that order of steps is not limited to the illustrated order, and a part of the steps may be omitted (the same holds true for the following flowcharts).

The flowchart of FIG. 5 illustrates an example in which the UE determines a model to be used, and transmits model identification information related to the model.

In Steps S101 and S102, the BS/UE downloads (receives) model information for the BS/UE from the data server, and deploys the models.

In Step S103, the UE determines a model to be used by the UE, and transmits model identification information related to the model to the BS.

In Step S104, the BS checks whether the model identified with the model identification information is available in the BS. When the model is unavailable or the like, for example, the BS may acquire information for the model from the data server, and update/deploy the model.

In Step S105, the BS transmits information for enabling the model identified with the model identification information in the UE and information related to corresponding configurations (for example, CSI configurations (CSI report configuration/CSI resource configuration/CSI-RS resource configuration)) to the UE.

After Step S105, the UE may perform control to transmit inference results using the model identified with the model identification information to the BS.

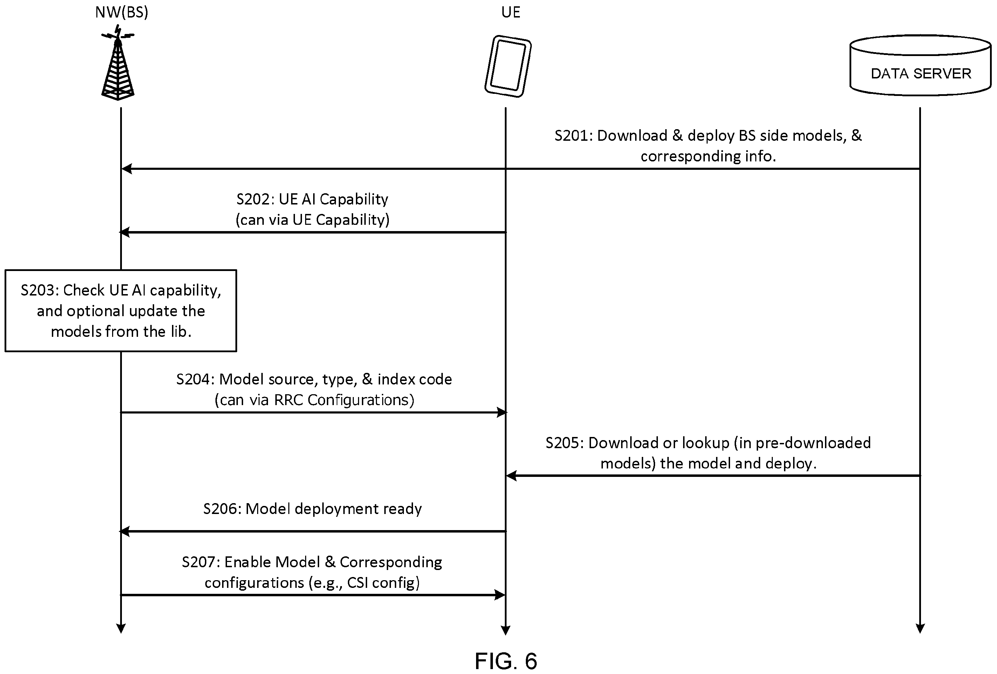

FIG. 6 is a diagram to illustrate an example of a flowchart according to Embodiment 1.1. The flowchart of FIG. 6 illustrates an example in which the BS determines a model to be used by the UE based on a capability of the UE, and transmits model identification information related to the model.

Step S201 is the same as Step S101.

In Step S202, the UE reports a capability for AI to the BS, using UE capability information.

In Step S203, the BS checks the capability for AI, and determines a model to be used by the UE. Note that, as necessary, the BS may acquire information for the model from the data server, and update/deploy the model.

In Step S204, the BS transmits model identification information related to the model of Step S203 to the UE.

In Step S205, the UE may download model information for the model identified with the model identification information from the data server, or may look up and acquire the model information from the model information downloaded in advance. The UE deploys the model, based on the model information.

In Step S206, the UE reports information indicating that model deployment is ready (or has been deployed) to the BS. The information may include at least a part of the model identification information, or it may be implicitly understood that the information corresponds to the latest model identification information.

Step S207 is the same as Step S105. Note that the model enabled in Step S207 corresponds to the model that has been deployed, which is explicitly/implicitly indicated by the information indicating that the model deployment is ready (or has been deployed).

### [Embodiment 1.2: Operation of Category 1]

The BS/UE of category 1 exchanges information of partial models, instead of minimum information such as the model identification information of category 0.

The information of partial models may include information of network structures (architectures) for the models, or may include weight information of the networks. Note that, in the present disclosure, the network architecture may be interchangeably interpreted as a model structure or the like.

The BS/UE that exchanges the information of the network structures may be referred to as the BS/UE of category 1-1. The BS/UE that exchanges the weight information of the networks may be referred to as the BS/UE of category 1-2.

The information of the network structures may include at least one of the following:
- (Embodiment 1.2.1) Information of an index of each network structure and corresponding hyperparameter values,
- (Embodiment 1.2.2) Combination information of networks (blocks),
- (Embodiment 1.2.3) Information for indicating each network structure (for example, code describing the network structure in conformity to a specific programming (description) language, pseudocode; for example, Python code).

Regarding Embodiment 1.2.1, one or more network structures may be identified together with hyperparameters configurable in the UE/BS. Note that the hyperparameters are parameters determined (configured) before training/inference, examples of which include the number of layers, the number of nodes of a certain layer, a learning rate, and the like.

Regarding Embodiment 1.2.2, the UE/BS may combine a plurality of networks to configure a single more complicated network, and may exchange combination information related to the combined network. Note that each single network that can be combined may be referred to as a block, and the information of the network structure of Embodiment 1.2.2 may also include information related to the blocks. The information related to the blocks may be information of indexes of the blocks and corresponding hyperparameter values, as with Embodiment 1.2.1.

Regarding Embodiment 1.2.3, the UE/BS may be able to implement any network structure in accordance with the pseudocode/Python code. Note that the information for indicating the network structure of Embodiment 1.2.3 may be the code itself, may be binary data indicating the code, or may be information (for example, one or more code indexes, when some codes are defined in advance (correspondence between code indexes and codes is defined)) that enables implementation of the code.

For Embodiment 1.2.1/1.2.2, correspondence between the indexes of the network structures and the network structures and corresponding hyperparameters may be understood by the UE/BS, based on standards (for example, 3GPP standards) (that is, the UE/BS may store information of the correspondence in advance).

For Embodiment 1.2.3, the programming (description) languages describing the network structures, corresponding platforms, and the like may be understood by the UE/BS, based on standards (for example, 3GPP standards) (that is, the UE/BS can understand the languages, and can implement processing based on the languages).

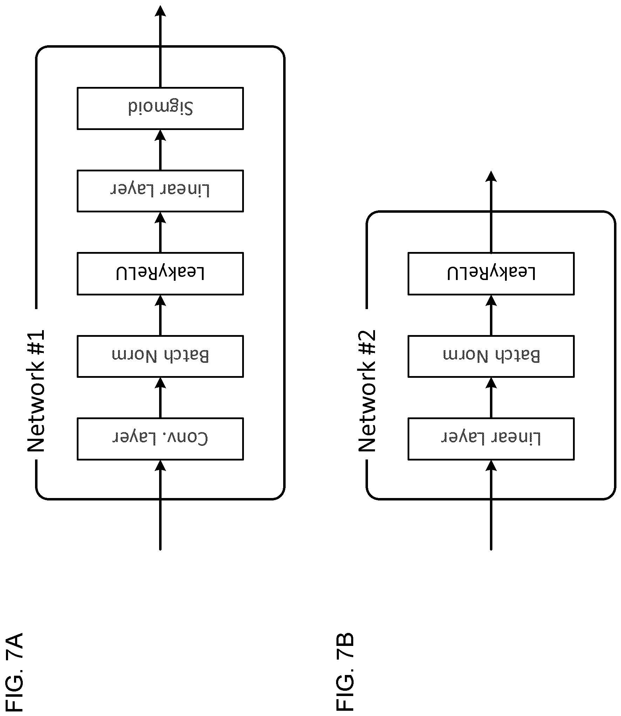

FIGS. 7A and 7B are diagrams to illustrate examples of network structures identified with the information of the network structures according to Embodiment 1.2.1.

FIG. 7A illustrates a structure of network #1 corresponding to index #1. Network #1 has a structure in which an input is processed in order of a convolutional layer, a batch normalization layer, a leaky ReLU layer, a linear function (identity function) layer, and a sigmoid function layer to be output. Corresponding hyperparameters may include at least one of the following, for example:
- Dimension of input/output of the convolutional layer,
- Kernel size of the convolutional layer,
- Negative gradient coefficient of the leaky ReLU layer,
- Dimension of input/output of the linear function layer.

FIG. 7B illustrates a structure of network #2 corresponding to index #2. Network #2 has a structure in which an input is processed in order of a linear function (identity function) layer, a batch normalization layer, and a leaky ReLU layer to be output. Corresponding hyperparameters may include at least one of the following, for example:
- Dimension of input/output of the linear function layer,
- Negative gradient coefficient of the leaky ReLU layer.

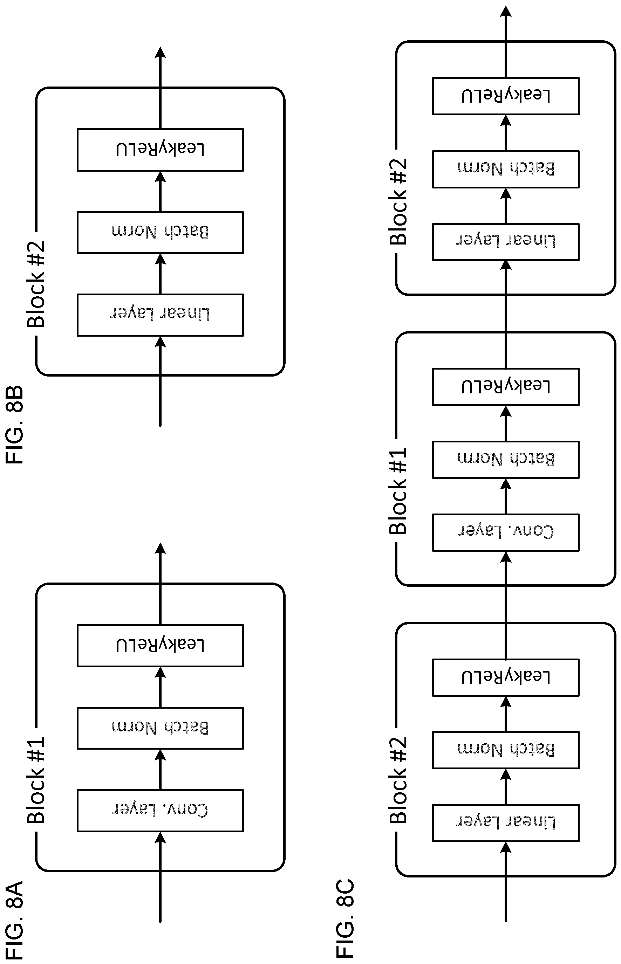

FIGS. 8A to 8C are diagrams to illustrate examples of network structures identified with the information of the network structures according to Embodiment 1.2.2.

FIG. 8A illustrates a structure of block #1 corresponding to index #1. Block #1 has a structure in which an input is processed in order of a convolutional layer, a batch normalization layer, and a leaky ReLU layer to be output. Corresponding hyperparameters may include at least one of the following, for example:
- Dimension of input/output of the convolutional layer,
- Kernel size of the convolutional layer,
- Negative gradient coefficient of the leaky ReLU layer.

FIG. 8B illustrates a structure of block #2 corresponding to index #2. Block #2 has a structure in which an input is processed in order of a linear function (identity function) layer, a batch normalization layer, and a leaky ReLU layer to be output. Corresponding hyperparameters may include at least one of the following, for example:
- Dimension of input/output of the linear function layer,
- Negative gradient coefficient of the leaky ReLU layer.

FIG. 8C illustrates an example of network structures identified using the combination information. The combination information of the present example corresponds to indexes #2, #1, and #2. Note that, when a plurality of blocks having the same index are included as in the present example, values of the hyperparameters corresponding thereto may be at least partially different or may be completely the same.

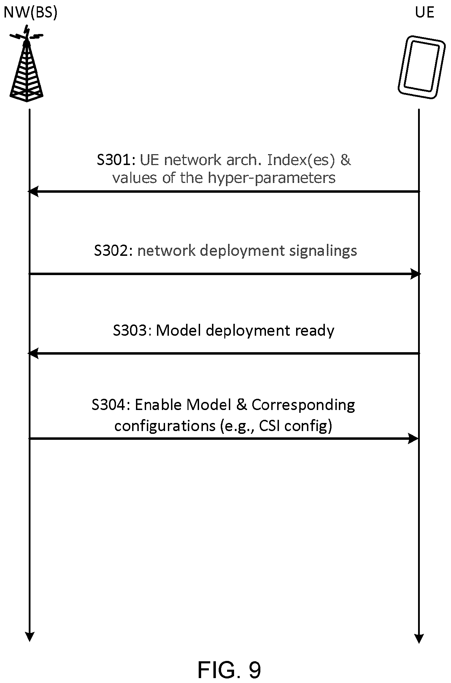

FIG. 9 is a diagram to illustrate an example of a flowchart according to Embodiment 1.2.1/1.2.2.

In Step S301, the UE transmits information of network structures (for example, information of indexes of the network structures and corresponding hyperparameter values) to the BS.

In Step S302, the BS notifies the UE of signaling indicating deployment of (models having) the networks corresponding to the information of the network structures.

In Step S303, the UE reports information indicating that model deployment is ready (or has been deployed) to the BS. The information may include the indexes of the network structures/combination information, or it may be implicitly understood that the information corresponds to (the networks indicated by) the latest information of the network structures having been transmitted.

Step S304 is the same as Step S207.

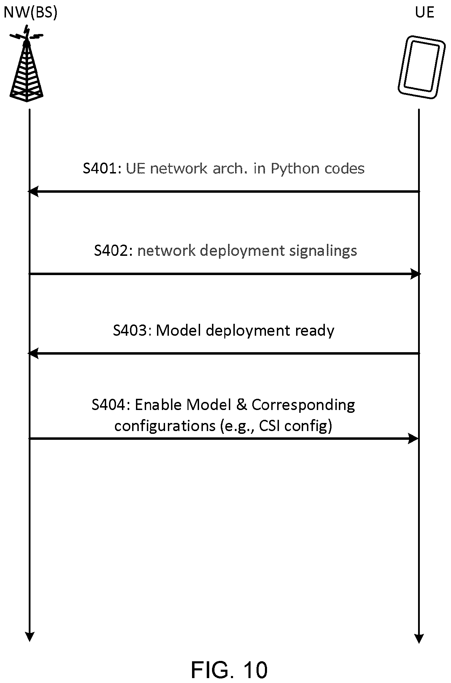

FIG. 10 is a diagram to illustrate an example of a flowchart according to Embodiment 1.2.3.

In Step S401, the UE transmits information of network structures (for example, Python codes describing the network structures) to the BS.

Steps S402 to S404 may be the same as Steps S302 to S304.

### [Embodiment 1.3: Operation of Category 2]

The BS/UE of category 2 exchanges information of partial or complete models.

The information (model identification information) may be information represented in an existing file format for a model (for example, the filename extension is onnx, bin, tflite, or the like), or may be information represented in another file format (for example, the filename extension is json, csv, tsv, xml, or the like). The information represented in such another file format may be used for exchanging information of partial parameters. For example, when the UE/BS updates model parameters of a certain model, the UE/BS may perform notification of information of the parameters updated using such another file format.

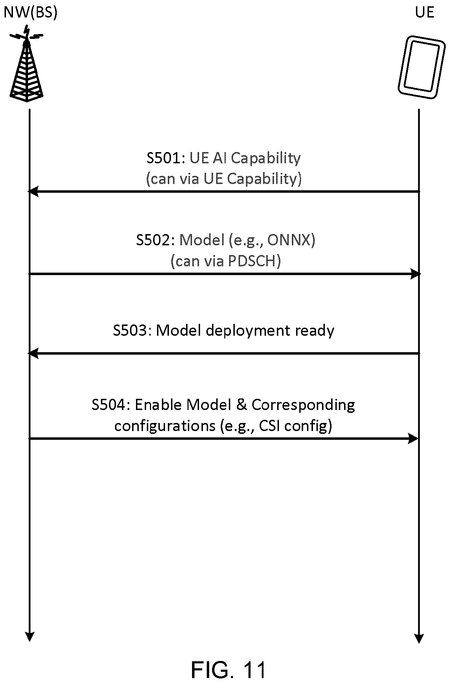

FIG. 11 is a diagram to illustrate an example of a flowchart according to Embodiment 1.3.

Step S501 may be the same as Step S202. Here, the capability information for AI may indicate supported file formats.

In Step S502, the BS checks the capability for AI, and transmits model identification information related to at least a part of certain models represented in the file formats (for example, the ONNX format) supported by the UE to the UE on the PDSCH, for example.

In Step S503, the UE reports information indicating that model deployment is ready (or has been deployed) to the BS. The information may include at least a part of the model identification information, or it may be implicitly understood that the information corresponds to the latest model identification information.

Step S504 may be the same as Step S207.

### [Embodiment 1.4: Operation of Category 3]

The BS/UE of category 3 exchanges information of data sets for training/validation/test.

The information (which may be referred to as data set information) may include information of at least one of a source (for example, a URL) of each data set and index information (for example, a hash value (MD5 code or the like) of a data set file).

The data set information may be information represented in a file format (for example, the filename extension is csv) for an existing data file.

The data set information may include at least one of information as to for what purpose (for example, training/validation/test) the data set is to be used, information (for example, the model identification information described in the embodiments described above) as to for which model the data set is to be used, and the like.

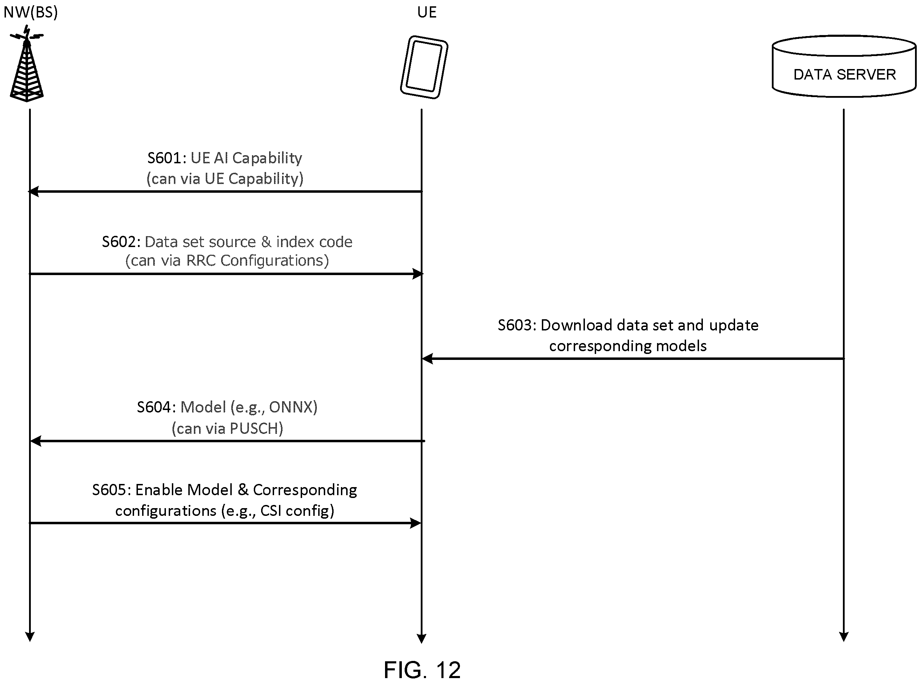

FIG. 12 is a diagram to illustrate an example of a flowchart according to Embodiment 1.4.

Step S601 may be the same as Step S202. Here, the capability information for AI may indicate supported formats for data sets and the like.

In Step S602, the BS checks the capability for AI, and transmits data set information for update of certain models represented in the file formats supported by the UE to the UE.

In Step S603, the UE may download the data sets identified with the data set information from the data server. The UE updates/deploys models corresponding to the data sets, based on the data sets.

In Step S604, the UE transmits model identification information related to at least a part of the models represented in a specific file format (for example, the ONNX format) to the BS on the PUSCH, for example.

Step S605 is the same as Step S105.

According to the first embodiment described above, the UE/BS can appropriately control model transfer, based on the model transfer categories.

### <Second Embodiment>

A second embodiment relates to a model management unit (MMU) being a unit (entity) for handling model transfer. Note that the MMU may be interchangeably interpreted as a Model Transfer Unit (MTU), a Model Transfer Management Unit (MTMU), or the like.

The MMU may be defined in both of the BS and the UE. Functions of the MMU may include one or more of the following:
- Process a signal of a corresponding RRC/MAC/PHY layer,
- Pack/unpack and transmit/receive an AI model (via user plane data or RRC signaling); or download/upload an AI model (for example, from/to the data server),
- Deploy/update an AI model,
- Pack/unpack and transmit/receive a data set; and train a network using the data set,
- Create a container corresponding to a downloaded image.

Note that "to pack" may mean "to convert certain data (structure) into binary", and "to unpack" may mean "to convert binary into certain data (structure)".

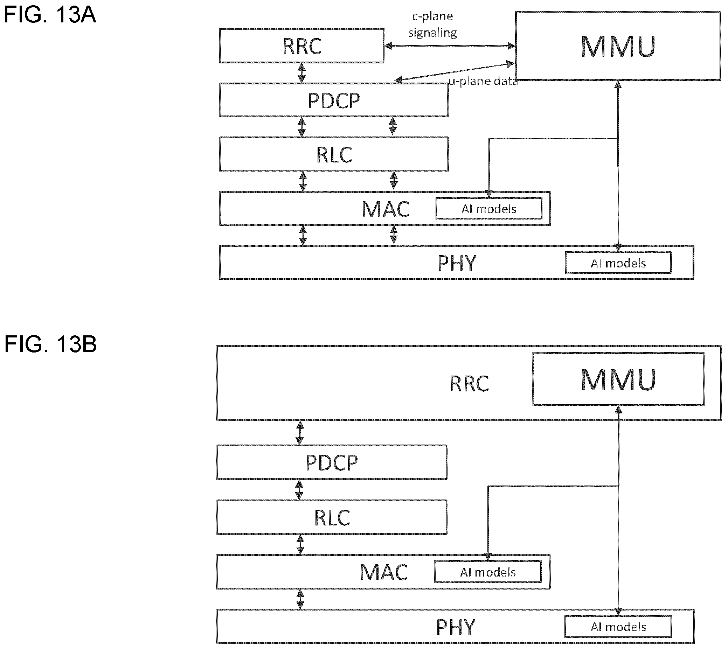

FIGS. 13A and 13B are diagrams to illustrate examples of a position of the MMU in a protocol stack according to the second embodiment.

An NR user (U) plane protocol stack includes, from the bottom, a Physical (PHY) layer, a MAC layer, a Packet Data Convergence Protocol (PDCP) layer, and a Radio Link Control (RLC) layer. Note that upper layers of the PDCP are omitted for the sake of simplicity.

An NR control (C) plane protocol stack includes, from the bottom, a PHY layer, a MAC layer, a PDCP layer, an RLC layer, and an RRC layer. Note that upper layers of the RRC are omitted for the sake of simplicity.

In the present example, it is assumed that the AI models are implemented in the PHY/MAC layer (controlled/processed in the PHY/MAC layer).

In FIG. 13A, the MMU is defined as an independent sublayer of layer 3 which is the same as RRC, and can handle both of a control plane signal and user plane data and can control the models implemented in the PHY/MAC layer.

In FIG. 13B, the MMU is defined as a functional unit of RRC, and can transfer all of messages related to model transfer, including model data, via RRC signaling.

The BS and the UE may control processing related to the AI models, based on the protocol stack as in FIG. 13A/13B using the MMU.

According to the second embodiment described above, the MMU is appropriately defined, and the UE/BS can appropriately handle model transfer.

### <Third Embodiment>

A third embodiment relates to signaling between the UE and the BS and corresponding UE operation. The following description presupposes the model transfer categories described in the first embodiment.

Regarding all of the categories, at least one of the following may be used:
- The UE receives an indication command for model information from the BS via DL signaling. The model information may be the model identification information described in the first embodiment. After receiving the indication command, the UE may deploy the model that has been downloaded or looked up.
- The UE may transmit a model preparation complete/nonsupport command to the BS via UL signaling. The model preparation complete command may be the information indicating that the model deployment is ready (or has been deployed) described in the first embodiment. The UE may transmit the nonsupport command when the UE does not support/cannot support the indicated model.
- The UE receives a model activation/deactivation command from the BS via DL signaling. The activation command may be the information for enabling the model identified with the model identification information in the UE described in the first embodiment. After receiving the activation command, the UE may start to use the indicated model for inference. After receiving the deactivation command, the UE may stop using the indicated model for inference.

Regarding category 1-1, at least one of the following may be used:
- Define a file format of a network structure,
- A file of the network structure is transferred as user plane data and processed by the MMU in the PDCP, or is transferred/processed as a part of RRC signaling in both of the DL and the UL.

Regarding category 1-2 or category 2, at least one of the following may be used:
- Define a file format (ONNX or the like) of an AI model,
- A file of the AI model is transferred as user plane data and processed by the MMU in the PDCP, or is transferred/processed as a part of RRC signaling in both of the DL and the UL.

Regarding category 3, the following may be used:
- The UE receives an indication command for a data set from the BS via DL signaling. The model information may be the data set information described in the first embodiment. After receiving the indication command, the UE may train/update an AI model, using the data set that has been downloaded or looked up.

Note that the UE/BS may be notified of the category to conform to via another apparatus (BS/UE/OAM/LMF or the like).

According to the third embodiment described above, signaling and corresponding UE operation can be appropriately controlled with reference to the model transfer categories.

### <Supplements>

Notification of any information (from the NW) to the UE in the embodiments described above (that is, reception of any information in the UE from the base station) may be performed using physical layer signaling (for example, DCI), higher layer signaling (for example, RRC signaling, a MAC CE), a specific signal/channel (for example, a PDCCH, a PDSCH, a reference signal), or a combination of these.

When the notification is performed using a MAC CE, the MAC CE may be identified with a new logical channel ID (LCID) not defined in existing standards being included in a MAC subheader.

When the notification is performed using DCI, the notification may be performed using a specific field in the DCI, a radio network temporary identifier (RNTI) used for scrambling of cyclic redundancy check (CRC) bits added to the DCI, a format of the DCI, or the like.

The notification of any information to the UE in the embodiments described above may be performed periodically, semi-persistently, or aperiodically.

Notification of any information from the UE (to the NW) in the embodiments described above (that is, transmission of any information in the UE to the base station) may be performed using physical layer signaling (for example, UCI), higher layer signaling (for example, RRC signaling, a MAC CE), a specific signal/channel (for example, a PUCCH, a PUSCH, a reference signal), or a combination of these.

When the notification is performed using a MAC CE, the MAC CE may be identified with a new LCID not defined in existing standards being included in a MAC subheader.

When the notification is performed using UCI, the notification may be transmitted using the PUCCH or the PUSCH.

The notification of any information from the UE in the embodiments described above may be performed periodically, semi-persistently, or aperiodically.

The encoder/decoder in the embodiments described above may be interchangeably interpreted as an AI model deployed in the UE/base station. In other words, the present disclosure may be applied not only when the autoencoder is used but also when inference is performed using any model. A target to be compressed by the UE/base station using the encoder in the present disclosure is not limited to CSI (or a channel/precoding matrix), and may be certain information.

At least one of the embodiments described above may be applied only to the UE that has reported a specific UE capability or that supports the specific UE capability.

The specific UE capability may indicate at least one of the following:
- Support specific processing/operation/control/information regarding at least one of the embodiments described above,
- Support a specific AI function (for example, a supported model type, model size, model identification information),
- Support AI model transfer (for example, categories 0 to 3).

The specific UE capability may be a capability applied to all of the frequencies (commonly irrespective of a frequency), may be a capability for each frequency (for example, one or a combination of a cell, a band, a BWP, a band combination, a component carrier, and the like), may be a capability for each frequency range (for example, Frequency Range 1 (FR1), FR2, FR3, FR4, FR5, FR2-1, FR2-2), or may be a capability for each subcarrier spacing (SCS).

The specific UE capability may be a capability applied to all of the duplex schemes (commonly irrespective of the duplex scheme), or may be a capability for each duplex scheme (for example, time division duplex (TDD), frequency division duplex (FDD)).

At least one of the embodiments described above may be applied when the UE is configured with specific information related to the embodiments described above using higher layer signaling. For example, the specific information may be information indicating enabling of use of an AI model, any RRC parameter for a specific release (for example, Rel. 18), or the like.

When the UE does not support at least one of the specific UE capabilities or is not configured with the specific information, the UE may apply Rel-15/16 operation, for example.

Note that at least one of the embodiments described above may be used for (compression of) transmission of information between the UE and the BS, other than the CSI feedback. For example, the UE may report information related to a position (or positioning)/information related to position estimation in the LMF to the network in accordance with at least one of the embodiments described above (may generate the information using the encoder, for example). The information may be information of a channel impulse response (CIR) for each subband/antenna port. Reporting thereof enables the base station to estimate the position of the UE without reporting an angle/time difference and the like of a received signal.

### (Supplementary Note)

Regarding one embodiment of the present disclosure, the following supplementary notes of the invention will be given.

### {Supplementary Note 1}

A terminal including:
a receiving section that receives information for identification of an artificial intelligence (AI) model, based on a model transfer category; and
a control section that performs inference based on the AI model identified based on the information.

### {Supplementary Note 2}

The terminal according to supplementary note 1, wherein the information includes a source Uniform Resource Locator (URL) of the AI model or index information of a file for the AI model.

### {Supplementary Note 3}

The terminal according to supplementary note 1 or 2, wherein the information includes information of a network structure for the AI model.

### {Supplementary Note 4}

The terminal according to any one of supplementary notes 1 to 3, wherein the control section controls processing related to the AI model, based on a protocol stack using a model management unit for handling model transfer.

### (Radio Communication System)

Hereinafter, a structure of a radio communication system according to one embodiment of the present disclosure will be described. In this radio communication system, the radio communication method according to each embodiment of the present disclosure described above may be used alone or may be used in combination for communication.

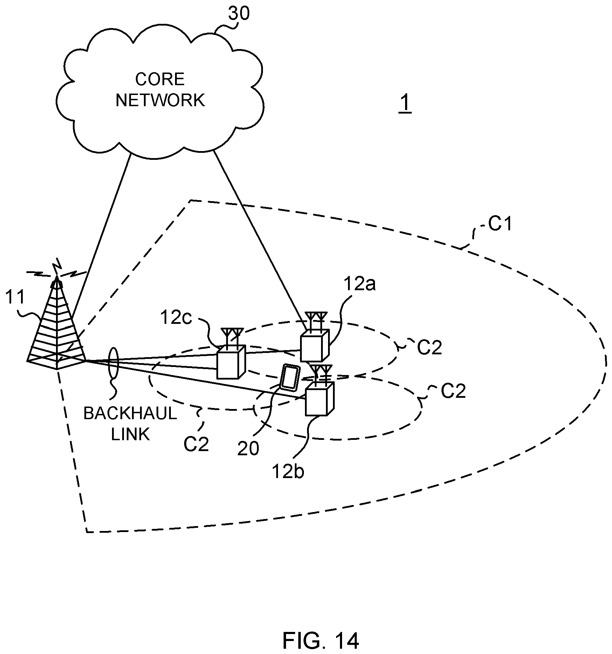

FIG. 14 is a diagram to illustrate an example of a schematic structure of the radio communication system according to one embodiment. A radio communication system 1 (which may be simply referred to as a system 1) may be a system implementing a communication using Long Term Evolution (LTE), 5th generation mobile communication system New Radio (5G NR) and so on the specifications of which have been drafted by Third Generation Partnership Project (3GPP).

The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and so on.

In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.

The radio communication system 1 may support dual connectivity between a plurality of base stations in the same RAT (for example, dual connectivity (NR-NR Dual Connectivity (NN-DC)) where both of an MN and an SN are base stations (gNB) of NR).

The radio communication system 1 may include a base station 11 that forms a macro cell C1 of a relatively wide coverage, and base stations 12 (12a to 12c) that form small cells C2, which are placed within the macro cell C1 and which are narrower than the macro cell C1. The user terminal 20 may be located in at least one cell. The arrangement, the number, and the like of each cell and user terminal 20 are by no means limited to the aspect illustrated in the diagram. Hereinafter, the base stations 11 and 12 will be collectively referred to as "base stations 10," unless specified otherwise.

The user terminal 20 may be connected to at least one of the plurality of base stations 10. The user terminal 20 may use at least one of carrier aggregation (CA) and dual connectivity (DC) using a plurality of component carriers (CCs).

Each CC may be included in at least one of a first frequency band (Frequency Range 1 (FR1)) and a second frequency band (Frequency Range 2 (FR2)). The macro cell C1 may be included in FR1, and the small cells C2 may be included in FR2. For example, FR1 may be a frequency band of 6 GHz or less (sub-6 GHz), and FR2 may be a frequency band which is higher than 24 GHz (above-24 GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) and frequency division duplex (FDD) in each CC.

The plurality of base stations 10 may be connected by a wired connection (for example, optical fiber in compliance with the Common Public Radio Interface (CPRI), the X2 interface and so on) or a wireless connection (for example, an NR communication). For example, if an NR communication is used as a backhaul between the base stations 11 and 12, the base station 11 corresponding to a higher station may be referred to as an "Integrated Access Backhaul (IAB) donor," and the base station 12 corresponding to a relay station (relay) may be referred to as an "IAB node."

The base station 10 may be connected to a core network 30 through another base station 10 or directly. For example, the core network 30 may include at least one of Evolved Packet Core (EPC), 5G Core Network (5GCN), Next Generation Core (NGC), and so on.

The core network 30 may include network functions (NFs), such as a User Plane Function (UPF), an Access and Mobility management Function (AMF), a Session Management Function (SMF), Unified Data Management (UDM), an Application Function (AF), a Data Network (DN), a Location Management Function (LMF), and Operation, Administration and Maintenance (Management) (OAM), for example. Note that a plurality of functions may be provided by one network node. Communication with an external network (for example, the Internet) may be performed via the DN.

The user terminal 20 may be a terminal supporting at least one of communication schemes such as LTE, LTE-A, and 5G.

In the radio communication system 1, an orthogonal frequency division multiplexing (OFDM)-based wireless access scheme may be used. For example, in at least one of the downlink (DL) and the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and so on may be used.

The wireless access scheme may be referred to as a "waveform." Note that, in the radio communication system 1, another wireless access scheme (for example, another single carrier transmission scheme, another multi-carrier transmission scheme) may be used for a wireless access scheme in the UL and the DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)) and so on, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on may be used as uplink channels.

User data, higher layer control information, System Information Blocks (SIBs) and so on are communicated on the PDSCH. User data, higher layer control information and so on may be communicated on the PUSCH. The Master Information Blocks (MIBs) may be communicated on the PBCH.

Lower layer control information may be communicated on the PDCCH. For example, the lower layer control information may include downlink control information (DCI) including scheduling information of at least one of the PDSCH and the PUSCH.

Note that DCI for scheduling the PDSCH may be referred to as "DL assignment," "DL DCI," and so on, and DCI for scheduling the PUSCH may be referred to as "UL grant," "UL DCI," and so on. Note that the PDSCH may be interpreted as "DL data," and the PUSCH may be interpreted as "UL data."

For detection of the PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a certain search space, based on search space configuration.

One search space may correspond to a PDCCH candidate corresponding to one or more aggregation levels. One or more search spaces may be referred to as a "search space set." Note that a "search space," a "search space set," a "search space configuration," a "search space set configuration," a "CORESET," a "CORESET configuration" and so on of the present disclosure may be interchangeably interpreted.

Uplink control information (UCI) including at least one of channel state information (CSI), transmission confirmation information (for example, which may be referred to as Hybrid Automatic Repeat reQuest ACKnowledgement (HARQ-ACK), ACK/NACK, and so on), and scheduling request (SR) may be communicated by means of the PUCCH. By means of the PRACH, random access preambles for establishing connections with cells may be communicated.

Note that the downlink, the uplink, and so on in the present disclosure may be expressed without a term of "link." In addition, various channels may be expressed without adding "Physical" to the head.

In the radio communication system 1, a synchronization signal (SS), a downlink reference signal (DL-RS), and so on may be communicated. In the radio communication system 1, a cell-specific reference signal (CRS), a channel state information-reference signal (CSI-RS), a demodulation reference signal (DMRS), a positioning reference signal (PRS), a phase tracking reference signal (PTRS), and so on may be communicated as the DL-RS.

For example, the synchronization signal may be at least one of a primary synchronization signal (PSS) and a secondary synchronization signal (SSS). A signal block including an SS (PSS, SSS) and a PBCH (and a DMRS for a PBCH) may be referred to as an "SS/PBCH block," an "SS Block (SSB)," and so on. Note that an SS, an SSB, and so on may also be referred to as a "reference signal."

In the radio communication system 1, a sounding reference signal (SRS), a demodulation reference signal (DMRS), and so on may be communicated as an uplink reference signal (UL-RS). Note that DMRS may be referred to as a "user terminal specific reference signal (UE-specific Reference Signal)."

### (Base Station)

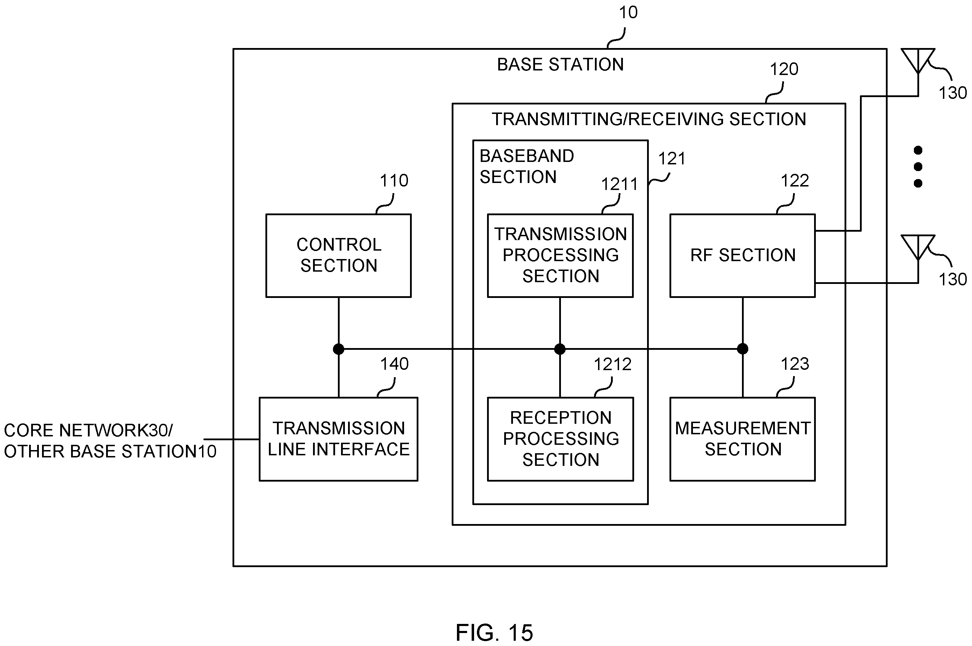

FIG. 15 is a diagram to illustrate an example of a structure of the base station according to one embodiment. The base station 10 includes a control section 110, a transmitting/receiving section 120, transmitting/receiving antennas 130 and a communication path interface (transmission line interface) 140. Note that the base station 10 may include one or more control sections 110, one or more transmitting/receiving sections 120, one or more transmitting/receiving antennas 130, and one or more communication path interfaces 140.

Note that, the present example primarily illustrates functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource allocation, mapping), and so on. The control section 110 may control transmission and reception, measurement and so on using the transmitting/receiving section 120, the transmitting/receiving antennas 130, and the communication path interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211, and the RF section 122. The receiving section may be constituted with the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmit beam and a receive beam by using digital beam forming (for example, precoding), analog beam forming (for example, phase rotation), and so on.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), and so on, for example, on data and control information and so on acquired from the control section 110, and may generate bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, and so on, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, and so on, on the signal of the radio frequency band received by the transmitting/receiving antennas 130.

The transmitting/receiving section 120 (reception processing section 1212) may apply reception processing such as analog-digital conversion, fast Fourier transform (FFT) processing, inverse discrete Fourier transform (IDFT) processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement related to the received signal. For example, the measurement section 123 may perform Radio Resource Management (RRM) measurement, Channel State Information (CSI) measurement, and so on, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 110.

The communication path interface 140 may perform transmission/reception (backhaul signaling) of a signal with an apparatus (for example, a network node that provides the NFs) included in the core network 30 or other base stations 10, and so on, and acquire or transmit user data (user plane data), control plane data, and so on for the user terminal 20.

Note that the transmitting section and the receiving section of the base station 10 in the present disclosure may be constituted with at least one of the transmitting/receiving section 120, the transmitting/receiving antennas 130, and the communication path interface 140.

Note that the transmitting/receiving section 120 may receive information for identification of an artificial intelligence (AI) model, based on a model transfer category. The control section 110 may perform inference based on the AI model identified based on the information.

### (User Terminal)

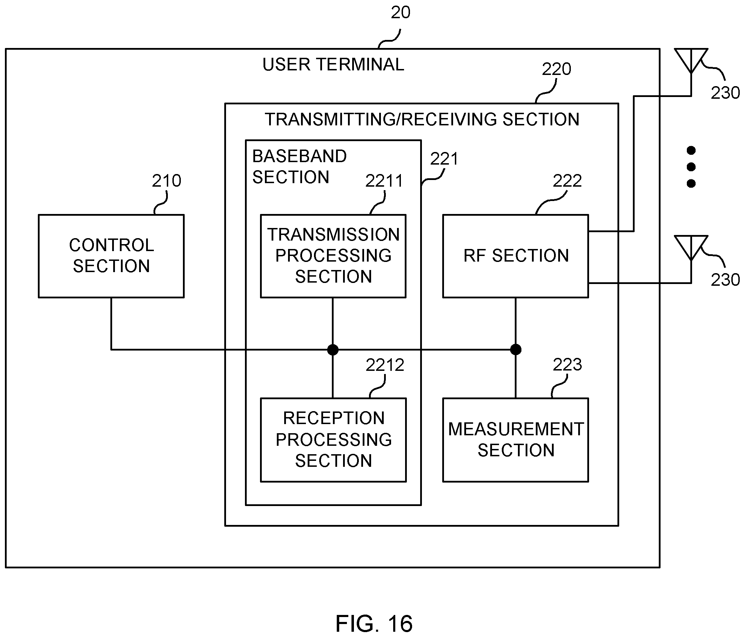

FIG. 16 is a diagram to illustrate an example of a structure of the user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily illustrates functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be structured as a transmitting/receiving section in one entity, or may be constituted with a transmitting section and a receiving section. The transmitting section may be constituted with the transmission processing section 2211, and the RF section 222. The receiving section may be constituted with the reception processing section 2212, the RF section 222, and the measurement section 223.

The transmitting/receiving antennas 230 can be constituted with antennas, for example, an array antenna, or the like described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmit beam and a receive beam by using digital beam forming (for example, precoding), analog beam forming (for example, phase rotation), and so on.

The transmitting/receiving section 220 (transmission processing section 2211) may perform the processing of the PDCP layer, the processing of the RLC layer (for example, RLC retransmission control), the processing of the MAC layer (for example, HARQ retransmission control), and so on, for example, on data and control information and so on acquired from the control section 210, and may generate bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, and so on, on the bit string to transmit, and output a baseband signal.

Note that, whether to apply DFT processing or not may be based on the configuration of the transform precoding. The transmitting/receiving section 220 (transmission processing section 2211) may perform, for a certain channel (for example, PUSCH), the DFT processing as the above-described transmission processing to transmit the channel by using a DFT-s-OFDM waveform if transform precoding is enabled, and otherwise, does not need to perform the DFT processing as the above-described transmission processing.

The transmitting/receiving section 220 (RF section 222) may perform modulation to a radio frequency band, filtering, amplification, and so on, on the baseband signal, and transmit the signal of the radio frequency band through the transmitting/receiving antennas 230.

On the other hand, the transmitting/receiving section 220 (RF section 222) may perform amplification, filtering, demodulation to a baseband signal, and so on, on the signal of the radio frequency band received by the transmitting/receiving antennas 230.

The transmitting/receiving section 220 (reception processing section 2212) may apply reception processing such as analog-digital conversion, FFT processing, IDFT processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 220 (measurement section 223) may perform the measurement related to the received signal. For example, the measurement section 223 may perform RRM measurement, CSI measurement, and so on, based on the received signal. The measurement section 223 may measure a received power (for example, RSRP), a received quality (for example, RSRQ, SINR, SNR), a signal strength (for example, RSSI), channel information (for example, CSI), and so on. The measurement results may be output to the control section 210.

Note that the transmitting section and the receiving section of the user terminal 20 in the present disclosure may be constituted with at least one of the transmitting/receiving section 220 and the transmitting/receiving antennas 230.

Note that the transmitting/receiving section 220 may receive information for identification of an artificial intelligence (AI) model, based on a model transfer category. The control section 210 may perform inference based on the AI model identified based on the information.

The information may include a source Uniform Resource Locator (URL) of the AI model or index information of a file for the AI model.

The information may include information of a network structure for the AI model.

The control section 210 may control processing related to the AI model, based on a protocol stack using a model management unit for handling model transfer.

### (Hardware Structure)

Note that the block diagrams that have been used to describe the above embodiments illustrate blocks in functional units. These functional blocks (components) may be implemented in arbitrary combinations of at least one of hardware and software. Also, the method for implementing each functional block is not particularly limited. That is, each functional block may be realized by one apparatus that is physically or logically coupled, or may be realized by directly or indirectly connecting two or more physically or logically separate apparatuses (for example, via wire, wireless, or the like) and using these plurality of apparatuses. The functional blocks may be implemented by combining softwares into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but function are by no means limited to these. For example, functional block (components) to implement a function of transmission may be referred to as a "transmitting section (transmitting unit)," a "transmitter," and the like. The method for implementing each component is not particularly limited as described above.

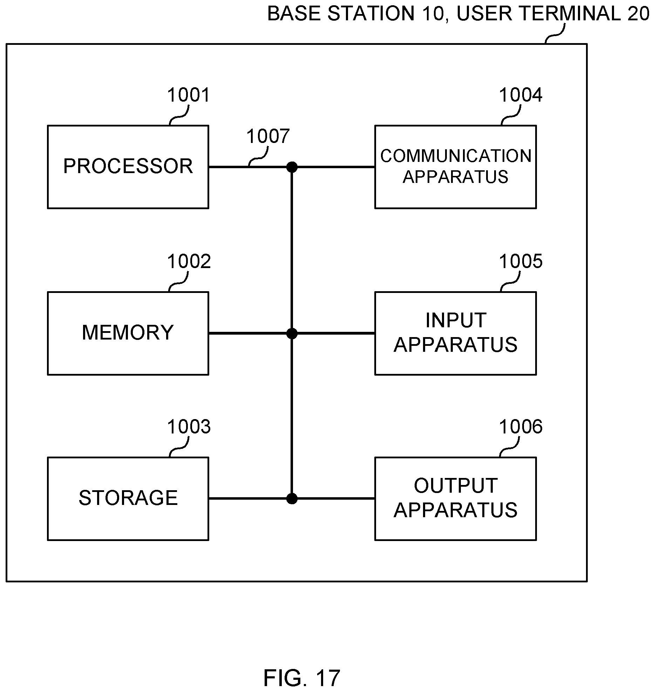

For example, a base station, a user terminal, and so on according to one embodiment of the present disclosure may function as a computer that executes the processes of the radio communication method of the present disclosure. FIG. 17 is a diagram to illustrate an example of a hardware structure of the base station and the user terminal according to one embodiment. Physically, the above-described base station 10 and user terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably interpreted. The hardware structure of the base station 10 and the user terminal 20 may be configured to include one or more of apparatuses illustrated in the drawings, or may be configured not to include part of apparatuses.

For example, although only one processor 1001 is illustrated, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminals 20 is implemented, for example, by allowing given software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least part of the above-described control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least part of the operations of the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register," a "cache," a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "secondary storage apparatus."

The communication apparatus 1004 is hardware (transmitting/receiving device) for allowing inter-computer communication via at least one of wired and wireless networks, and may be referred to as, for example, a "network device," a "network controller," a "network card," a "communication module," and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the above-described transmitting/receiving section 120 (220), the transmitting/receiving antennas 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor, and so on). The output apparatus 1006 is an output device that allows sending output to the outside (for example, a display, a speaker, a Light Emitting Diode (LED) lamp, and so on). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between apparatuses.

Also, the base station 10 and the user terminals 20 may be structured to include hardware such as a microprocessor, a digital signal processor (DSP), an Application Specific Integrated Circuit (ASIC), a Programmable Logic Device (PLD), a Field Programmable Gate Array (FPGA), and so on, and part or all of the functional blocks may be implemented by the hardware. For example, the processor 1001 may be implemented with at least one of these items of hardware.

### (Variations)

Note that the terminology described in the present disclosure and the terminology that is needed to understand the present disclosure may be replaced by other terms that convey the same or similar meanings. For example, a "channel," a "symbol," and a "signal" (or signaling) may be interchangeably interpreted. Also, "signals" may be "messages." A reference signal may be abbreviated as an "RS," and may be referred to as a "pilot," a "pilot signal," and so on, depending on which standard applies. Furthermore, a "component carrier (CC)" may be referred to as a "cell," a "frequency carrier," a "carrier frequency" and so on.

A radio frame may be constituted of one or a plurality of periods (frames) in the time domain. Each of one or a plurality of periods (frames) constituting a radio frame may be referred to as a "subframe." Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a certain signal or channel. For example, numerology may indicate at least one of a subcarrier spacing (SCS), a bandwidth, a symbol length, a cyclic prefix length, a transmission time interval (TTI), the number of symbols per TTI, a radio frame structure, a specific filter processing performed by a transceiver in the frequency domain, a specific windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot." A mini-slot may be constituted of symbols less than the number of slots. A PDSCH (or PUSCH) transmitted in a time unit larger than a mini-slot may be referred to as "PDSCH (PUSCH) mapping type A." A PDSCH (or PUSCH) transmitted using a mini-slot may be referred to as "PDSCH (PUSCH) mapping type B."

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably interpreted.

For example, one subframe may be referred to as a "TTI," a plurality of consecutive subframes may be referred to as a "TTI," or one slot or one mini-slot may be referred to as a "TTI." That is, at least one of a subframe and a TTI may be a subframe (1 ms) in existing LTE, may be a shorter period than 1 ms (for example, 1 to 13 symbols), or may be a longer period than 1 ms. Note that a unit expressing TTI may be referred to as a "slot," a "mini-slot," and so on instead of a "subframe."

Here, a TTI refers to the minimum time unit of scheduling in radio communication, for example. For example, in LTE systems, a base station schedules the allocation of radio resources (such as a frequency bandwidth and transmit power that are available for each user terminal) for the user terminal in TTI units. Note that the definition of TTIs is not limited to this.

TTIs may be transmission time units for channel-encoded data packets (transport blocks), code blocks, or codewords, or may be the unit of processing in scheduling, link adaptation, and so on. Note that, when TTIs are given, the time interval (for example, the number of symbols) to which transport blocks, code blocks, codewords, or the like are actually mapped may be shorter than the TTIs.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI," a "normal subframe," a "long subframe," a "slot" and so on. A TTI that is shorter than a normal TTI may be referred to as a "shortened TTI," a "short TTI," a "partial or fractional TTI," a "shortened subframe," a "short subframe," a "mini-slot," a "sub-slot," a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))," a "sub-carrier group (SCG)," a "resource element group (REG),"a "PRB pair," an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth," and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for the UL) and a DL BWP (BWP for the DL). One or a plurality of BWPs may be configured in one carrier for a UE.

At least one of configured BWPs may be active, and a UE does not need to assume to transmit/receive a given signal/channel outside active BWPs. Note that a "cell," a "carrier," and so on in the present disclosure may be interpreted as a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Also, the information, parameters, and so on described in the present disclosure may be represented in absolute values or in relative values with respect to given values, or may be represented in another corresponding information. For example, radio resources may be specified by given indices.

The names used for parameters and so on in the present disclosure are in no respect limiting. Furthermore, mathematical expressions that use these parameters, and so on may be different from those expressly disclosed in the present disclosure. For example, since various channels (PUCCH, PDCCH, and so on) and information elements can be identified by any suitable names, the various names allocated to these various channels and information elements are in no respect limiting.

The information, signals, and so on described in the present disclosure may be represented by using any of a variety of different technologies. For example, data, instructions, commands, information, signals, bits, symbols, chips, and so on, all of which may be referenced throughout the herein-contained description, may be represented by voltages, currents, electromagnetic waves, magnetic fields or particles, optical fields or photons, or any combination of these.

Also, information, signals, and so on can be output in at least one of from higher layers to lower layers and from lower layers to higher layers. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or appended. The information, signals, and so on that are output may be deleted. The information, signals, and so on that are input may be transmitted to another apparatus.

Reporting of information is by no means limited to the aspects/embodiments described in the present disclosure, and other methods may be used as well. For example, reporting of information in the present disclosure may be implemented by using physical layer signaling (for example, downlink control information (DCI), uplink control information (UCI)), higher layer signaling (for example, Radio Resource Control (RRC) signaling, broadcast information (master information block (MIB), system information blocks (SIBs), and so on), Medium Access Control (MAC) signaling and so on), and other signals or combinations of these.

Note that physical layer signaling may be referred to as "Layer 1/Layer 2 (L1/L2) control information (L1/L2 control signals)," "L1 control information (L1 control signal)," and so on. Also, RRC signaling may be referred to as an "RRC message," and can be, for example, an RRC connection setup message, an RRC connection reconfiguration message, and so on. Also, MAC signaling may be reported using, for example, MAC control elements (MAC CEs).

Also, reporting of given information (for example, reporting of "X holds") does not necessarily have to be reported explicitly, and can be reported implicitly (by, for example, not reporting this given information or reporting another information).

Determinations may be made in values represented by one bit (0 or 1), may be made in Boolean values that represent true or false, or may be made by comparing numerical values (for example, comparison against a given value).

Software, whether referred to as "software," "firmware," "middleware," "microcode," or "hardware description language," or called by other terms, should be interpreted broadly to mean instructions, instruction sets, code, code segments, program codes, programs, subprograms, software modules, applications, software applications, software packages, routines, subroutines, objects, executable files, execution threads, procedures, functions, and so on.

Also, software, commands, information, and so on may be transmitted and received via communication media. For example, when software is transmitted from a website, a server, or other remote sources by using at least one of wired technologies (coaxial cables, optical fiber cables, twisted-pair cables, digital subscriber lines (DSL), and so on) and wireless technologies (infrared radiation, microwaves, and so on), at least one of these wired technologies and wireless technologies are also included in the definition of communication media.

The terms "system" and "network" used in the present disclosure can be used interchangeably. The "network" may mean an apparatus (for example, a base station) included in the network.

In the present disclosure, the terms such as "precoding," a "precoder," a "weight (precoding weight)," "quasi-co-location (QCL)," a "Transmission Configuration Indication state (TCI state)," a "spatial relation," a "spatial domain filter," a "transmit power," "phase rotation," an "antenna port," an "antenna port group," a "layer," "the number of layers," a "rank," a "resource," a "resource set," a "resource group," a "beam," a "beam width," a "beam angular degree," an "antenna," an "antenna element," a "panel," and so on can be used interchangeably.

In the present disclosure, the terms such as a "base station (BS)," a "radio base station," a "fixed station," a "NodeB," an "eNB (eNodeB)," a "gNB (gNodeB)," an "access point," a "transmission point (TP)," a "reception point (RP)," a "transmission/reception point (TRP)," a "panel," a "cell," a "sector," a "cell group," a "carrier," a "component carrier," and so on can be used interchangeably. The base station may be referred to as the terms such as a "macro cell," a "small cell," a "femto cell," a "pico cell," and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, the base station transmitting information to the terminal may be interchangeably interpreted as the base station indicating control/operation based on the information to the terminal.

In the present disclosure, the terms "mobile station (MS)," "user terminal," "user equipment (UE)," and "terminal" may be used interchangeably.

A mobile station may be referred to as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases.

At least one of a base station and a mobile station may be referred to as a "transmitting apparatus," a "receiving apparatus," a "radio communication apparatus," and so on. Note that at least one of a base station and a mobile station may be a device mounted on a moving object or a moving object itself, and so on.

The moving object is a movable object with any moving speed, and naturally a case where the moving object is stopped is also included. Examples of the moving object include a vehicle, a transport vehicle, an automobile, a motorcycle, a bicycle, a connected car, a loading shovel, a bulldozer, a wheel loader, a dump truck, a fork lift, a train, a bus, a trolley, a rickshaw, a ship and other watercraft, an airplane, a rocket, a satellite, a drone, a multicopter, a quadcopter, a balloon, and an object mounted on any of these, but these are not restrictive. The moving object may be a moving object that autonomously travels based on a direction for moving.

The moving object may be a vehicle (for example, a car, an airplane, and the like), may be a moving object which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor.

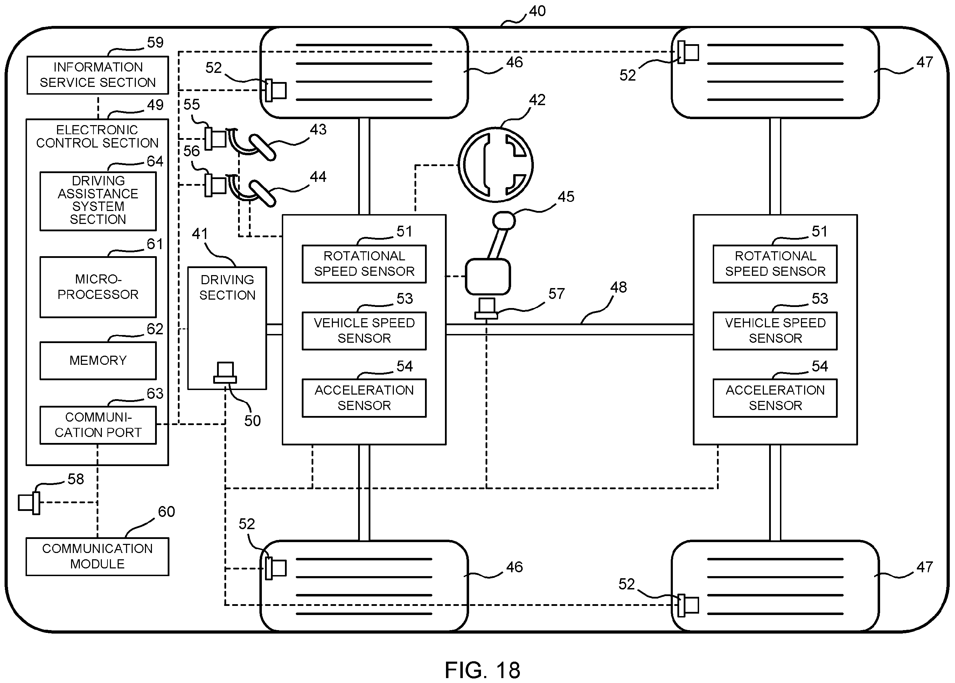

FIG. 18 is a diagram to illustrate an example of a vehicle according to one embodiment. A vehicle 40 includes a driving section 41, a steering section 42, an accelerator pedal 43, a brake pedal 44, a shift lever 45, right and left front wheels 46, right and left rear wheels 47, an axle 48, an electronic control section 49, various sensors (including a current sensor 50, a rotational speed sensor 51, a pneumatic sensor 52, a vehicle speed sensor 53, an acceleration sensor 54, an accelerator pedal sensor 55, a brake pedal sensor 56, a shift lever sensor 57, and an object detection sensor 58), an information service section 59, and a communication module 60.

The driving section 41 includes, for example, at least one of an engine, a motor, and a hybrid of an engine and a motor. The steering section 42 at least includes a steering wheel, and is configured to steer at least one of the front wheels 46 and the rear wheels 47, based on operation of the steering wheel operated by a user.

The electronic control section 49 includes a microprocessor 61, a memory (ROM, RAM) 62, and a communication port (for example, an input/output (IO) port) 63. The electronic control section 49 receives, as input, signals from the various sensors 50 to 58 included in the vehicle. The electronic control section 49 may be referred to as an Electronic Control Unit (ECU).

Examples of the signals from the various sensors 50 to 58 include a current signal from the current sensor 50 for sensing current of a motor, a rotational speed signal of the front wheels 46/rear wheels 47 acquired by the rotational speed sensor 51, a pneumatic signal of the front wheels 46/rear wheels 47 acquired by the pneumatic sensor 52, a vehicle speed signal acquired by the vehicle speed sensor 53, an acceleration signal acquired by the acceleration sensor 54, a depressing amount signal of the accelerator pedal 43 acquired by the accelerator pedal sensor 55, a depressing amount signal of the brake pedal 44 acquired by the brake pedal sensor 56, an operation signal of the shift lever 45 acquired by the shift lever sensor 57, and a detection signal for detecting an obstruction, a vehicle, a pedestrian, and the like acquired by the object detection sensor 58.

The information service section 59 includes various devices for providing (outputting) various information such as drive information, traffic information, and entertainment information, such as a car navigation system, an audio system, a speaker, a display, a television, and a radio, and one or more ECUs that control these devices. The information service section 59 provides various information/services (for example, multimedia information/multimedia service) for an occupant of the vehicle 40, using information acquired from an external apparatus via the communication module 60 and the like.

The information service section 59 may include an input device (for example, a keyboard, a mouse, a microphone, a switch, a button, a sensor, a touch panel, and the like) for receiving input from the outside, or may include an output device (for example, a display, a speaker, an LED lamp, a touch panel, and the like) for implementing output to the outside.

A driving assistance system section 64 includes various devices for providing functions for preventing an accident and reducing a driver's driving load, such as a millimeter wave radar, Light Detection and Ranging (LiDAR), a camera, a positioning locator (for example, a Global Navigation Satellite System (GNSS) and the like), map information (for example, a high definition (HD) map, an autonomous vehicle (AV) map, and the like), a gyro system (for example, an inertial measurement apparatus (inertial measurement unit (IMU)), an inertial navigation apparatus (inertial navigation system (INS)), and the like), an artificial intelligence (AI) chip, and an AI processor, and one or more ECUs that control these devices. The driving assistance system section 64 transmits and receives various information via the communication module 60, and implements a driving assistance function or an autonomous driving function.

The communication module 60 can communicate with the microprocessor 61 and the constituent elements of the vehicle 40 via the communication port 63. For example, via the communication port 63, the communication module 60 transmits and receives data (information) to and from the driving section 41, the steering section 42, the accelerator pedal 43, the brake pedal 44, the shift lever 45, the right and left front wheels 46, the right and left rear wheels 47, the axle 48, the microprocessor 61 and the memory (ROM, RAM) 62 in the electronic control section 49, and the various sensors 50 to 58, which are included in the vehicle 40.

The communication module 60 can be controlled by the microprocessor 61 of the electronic control section 49, and is a communication device that can perform communication with an external apparatus. For example, the communication module 60 performs transmission and reception of various information to and from the external apparatus via radio communication. The communication module 60 may be either inside or outside the electronic control section 49. The external apparatus may be, for example, the base station 10, the user terminal 20, or the like described above. The communication module 60 may be, for example, at least one of the base station 10 and the user terminal 20 described above (may function as at least one of the base station 10 and the user terminal 20).

The communication module 60 may transmit at least one of signals from the various sensors 50 to 58 described above input to the electronic control section 49, information obtained based on the signals, and information based on an input from the outside (a user) obtained via the information service section 59, to the external apparatus via radio communication. The electronic control section 49, the various sensors 50 to 58, the information service section 59, and the like may be referred to as input sections that receive input. For example, the PUSCH transmitted by the communication module 60 may include information based on the input.

The communication module 60 receives various information (traffic information, signal information, inter-vehicle distance information, and the like) transmitted from the external apparatus, and displays the various information on the information service section 59 included in the vehicle. The information service section 59 may be referred to as an output section that outputs information (for example, outputs information to devices, such as a display and a speaker, based on the PDSCH received by the communication module 60 (or data/information decoded from the PDSCH)).

The communication module 60 stores the various information received from the external apparatus in the memory 62 that can be used by the microprocessor 61. Based on the information stored in the memory 62, the microprocessor 61 may perform control of the driving section 41, the steering section 42, the accelerator pedal 43, the brake pedal 44, the shift lever 45, the right and left front wheels 46, the right and left rear wheels 47, the axle 48, the various sensors 50 to 58, and the like included in the vehicle 40.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)," "Vehicle-to-Everything (V2X)," and the like). In this case, user terminals 20 may have the functions of the base stations 10 described above. The words such as "uplink" and "downlink" may be interpreted as the words corresponding to the terminal-to-terminal communication (for example, "sidelink"). For example, an uplink channel, a downlink channel and so on may be interpreted as a sidelink channel.

Likewise, the user terminal in the present disclosure may be interpreted as base station. In this case, the base station 10 may have the functions of the user terminal 20 described above.

Actions which have been described in the present disclosure to be performed by a base station may, in some cases, be performed by upper nodes of the base station. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

The aspects/embodiments illustrated in the present disclosure may be used individually or in combinations, which may be switched depending on the mode of implementation. The order of processes, sequences, flowcharts, and so on that have been used to describe the aspects/embodiments in the present disclosure may be reordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG (where x is, for example, an integer or a decimal)), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and next-generation systems that are enhanced, modified, created, or defined based on these. A plurality of systems may be combined (for example, a combination of LTE or LTE-A and 5G, and the like) and applied.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first," "second," and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "judging (determining)" as in the present disclosure herein may encompass a wide variety of actions. For example, "judging (determining)" may be interpreted to mean making "judgments (determinations)" about judging, calculating, computing, processing, deriving, investigating, looking up, search and inquiry (for example, searching a table, a database, or some other data structures), ascertaining, and so on.

Furthermore, "judging (determining)" may be interpreted to mean making "judgments (determinations)" about receiving (for example, receiving information), transmitting (for example, transmitting information), input, output, accessing (for example, accessing data in a memory), and so on.

In addition, "judging (determining)" as used herein may be interpreted to mean making "judgments (determinations)" about resolving, selecting, choosing, establishing, comparing, and so on. In other words, "judging (determining)" may be interpreted to mean making "judgments (determinations)" about some action.

In addition, "judging (determining)" may be interpreted as "assuming," "expecting," "considering," and the like.

"The maximum transmit power" according to the present disclosure may mean a maximum value of the transmit power, may mean the nominal maximum transmit power (the nominal UE maximum transmit power), or may mean the rated maximum transmit power (the rated UE maximum transmit power).

The terms "connected" and "coupled," or any variation of these terms as used in the present disclosure mean all direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access."

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other." Note that the phrase may mean that "A and B are each different from C." The terms "separate," "be coupled," and so on may be interpreted similarly to "different."

When terms such as "include," "including," and variations of these are used in the present disclosure, these terms are intended to be inclusive, in a manner similar to the way the term "comprising" is used. Furthermore, the term "or" as used in the present disclosure is intended to be not an exclusive disjunction.

For example, in the present disclosure, when an article such as "a," "an," and "the" in the English language is added by translation, the present disclosure may include that a noun after these articles is in a plural form.

In the present disclosure, "equal to or smaller than," "smaller than," "equal to or larger than," "larger than," "equal to," and the like may be interchangeably interpreted. In the present disclosure, words meaning "good", "poor", "large", "small", "high", "low", "early", "late", and the like may be interchangeably interpreted (regardless of the positive degree, the comparative degree, or the superlative degree). In the present disclosure, words meaning "good", "poor", "large", "small", "high", "low", "early", "late", and the like may be interchangeably interpreted as expressions provided with "i-th" (regardless of the positive degree, the comparative degree, or the superlative degree) (for example, "highest" may be interchangeably interpreted "i-th highest").

In the present disclosure, "of," "for," "regarding," "related to," "associated with," and the like may be interchangeably interpreted.

Now, although the invention according to the present disclosure has been described in detail above, it should be obvious to a person skilled in the art that the invention according to the present disclosure is by no means limited to the embodiments described in the present disclosure. The invention according to the present disclosure can be implemented with various corrections and in various modifications, without departing from the spirit and scope of the invention defined by the recitations of claims. Consequently, the description of the present disclosure is provided only for the purpose of explaining examples, and should by no means be construed to limit the invention according to the present disclosure in any way.

## Claims

1. A terminal comprising:
a receiving section that receives information for identification of an artificial intelligence (AI) model based on a model transfer category; and
a control section that performs inference based on the AI model identified based on the information.

2. The terminal according to claim 1, wherein
the information includes a source Uniform Resource Locator (URL) of the AI model or index information of a file for the AI model.

3. The terminal according to claim 1, wherein
the information includes information of a network structure for the AI model.

4. The terminal according to claim 1, wherein
the control section controls processing related to the AI model based on a protocol stack using a model management unit for handling model transfer.

5. A radio communication method for a terminal, the radio communication method comprising:
receiving information for identification of an artificial intelligence (AI) model based on a model transfer category; and
performing inference based on the AI model identified based on the information.

6. A base station comprising:
a receiving section that receives information for identification of an artificial intelligence (AI) model based on a model transfer category; and
a control section that performs inference based on the AI model identified based on the information.
